# DEMANDE DE BREVET EUROPEEN

(11) **EP 2 455 248 A1**
(43) Date de publication de la demande: **23.05.2012**
(21) Numéro de dépôt: 11186007.8
(22) Date de dépôt: 20.10.2011
(51) Int. Cl.: B60K 11/04, B60R 21/34, B62D 25/08, B62D 25/10

(54) **Bloc avant d'un vehicule automobile**

(30) Priorité: 23.11.2010 FR 1059613
(71) Demandeur: PSA Peugeot Citroen Automobiles S.A., 78140 Velizy Villacoublay (FR)
(72) Inventeur: Akoum, Hassan, 92210 ST CLOUD (FR)

(57) **Abrégé**

Bloc avant (1) d'un véhicule automobile comportant un groupe motopropulseur (4), un module de refroidissement (6) adapté pour évacuer de la chaleur du groupe motopropulseur (4), un capot (7) disposé au dessus du groupe motopropulseur (4) et du module de refroidissement (6) les recouvrant au moins partiellement, le bloc avant (1) est caractérisé en ce que:
- le module de refroidissement (6) est fixé au capot (7) par au moins un support de fixation (17) en dessous du capot (7) dans un espace (13) ménagé entre une surface supérieure du groupe motopropulseur (14) et une surface inférieure du capot (15), et
- le support de fixation (17) comporte une caractéristique mécanique telle que, lors d'un choc piéton, le capot (7) se déforme sans que la surface inférieure du capot (15) n'entre en contact avec une surface supérieure du module de refroidissement (16).

## Description

L'invention concerne un bloc avant de véhicule automobile. Elle concerne également un véhicule automobile.

Lors d'un choc d'un véhicule heurtant un piéton ou un cycliste, les différentes parties du corps humain peuvent impacter différentes parties de l'avant du véhicule. Etant donné qu'un piéton ne possède typiquement aucun moyen de protection pour s'en prémunir, les conséquences d'un tel choc peuvent être particulièrement invalidantes, voire mortelles. Les normes et les procédures d'essai réglementaires et consuméristes pratiquées prennent en compte les conséquences d'un choc tête contre bouclier, fémur-hanche contre «nez de capot», tête contre capot et pare-brise. Par exemple, les normes Européenne ISO 14513:2006 et ISO 16850:2007 spécifient des méthodes d'essai visant à simuler le choc frontal de la tête d'un piéton contre un véhicule, et l'organisme Euro NCAP (de l'anglais European New Car Assesment Program) prend en compte les résultats de telles collisions lors des crashs tests dans une note spécifique «choc contre piétons». Les constructeurs automobiles cherchent à minimiser les risques de lésions sur les différentes parties du corps humain par la mise au point d'éléments au comportement mécanique et aux formes optimisés pour amortir le choc lors d'une collision. Par exemple, le bouclier et le capot d'un véhicule automobile ont pour fonction de dissiper au mieux l'énergie du choc par leur déformation afin de réduire la gravité d'un impact entre l'avant du véhicule et le piéton en cas de collision et limiter les risques de blessures.

Le document FR2852892 décrit un bloc avant comportant un groupe motopropulseur, un radiateur de refroidissement du groupe moteur, alimenté en air provenant de l'extérieur, et un capot recouvrant ces éléments. Pour réduire la valeur du porte-à-faux avant de ce bloc avant, le radiateur est disposé en arrière, par rapport au sens normal de déplacement du véhicule, du groupe moteur. Pour acheminer l'air depuis l'extérieur jusqu'au radiateur, le bloc avant comporte une gaine flexible de canalisation de l'air, disposée entre le groupe moteur et le capot, ouverte à son extrémité avant et débouchant sur le radiateur à son extrémité arrière.

Une telle solution technique évite la présence d'un composant rigide en partie avant afin de tenir compte des conséquences possibles d'un choc piéton. Cependant, une telle solution technique n'est pas satisfaisante car l'implantation du radiateur de refroidissement du groupe moteur en arrière du groupe motopropulseur en position verticale ne permet pas d'obtenir un ensemble compact en longueur. En outre, la gaine flexible de canalisation de l'air est encombrante.

Le document FR2942428 décrit un véhicule comprenant un module aérothermique constitué au moins par du matériel de refroidissement du moteur comportant un radiateur et un groupe moto-ventilateur. Ce module aérothermique est placé au dessus du groupe motopropulseur du véhicule, dans l'espace compris entre la surface fictive dite de capot technique et la surface du groupe motopropulseur augmenté de son débattement, de manière à réduire la distance entre ledit groupe motopropulseur et la poutre de choc à l'avant du véhicule et, en conséquence, à réduire le porte-à-faux avant technique du véhicule.

Une telle solution technique n'est pas satisfaisante car l'implantation du matériel de refroidissement du moteur au dessus du groupe motopropulseur ne permet pas de tenir compte des conséquences possibles d'un choc piéton notamment de la tête contre le capot. En effet, une déformation du capot pour absorber un tel choc piéton étant limitée par la présence du matériel de refroidissement du moteur situé en dessous.

Un but de l'invention est de proposer un bloc avant remédiant à au moins un des inconvénients de l'art antérieur. En particulier, l'invention vise à améliorer le choc piéton, c'est-à-dire dissiper au mieux l'énergie du choc et donc limiter la gravité des blessures causés à un piéton en cas de choc contre l'avant du véhicule.

Ce but est atteint, selon un premier aspect de l'invention, par un bloc avant d'un véhicule automobile comportant un groupe motopropulseur, un module de refroidissement adapté pour évacuer de la chaleur du groupe motopropulseur, un capot disposé au dessus du groupe motopropulseur et du module de refroidissement les recouvrant au moins partiellement. Le module de refroidissement est fixé au capot par au moins un support de fixation en dessous du capot dans un espace ménagé entre une surface supérieure du groupe motopropulseur et une surface inférieure du capot. Le support de fixation comporte une caractéristique mécanique telle que, lors d'un choc piéton, le capot se déforme sans que la surface inférieure du capot n'entre en contact avec une surface supérieure du module de refroidissement.

La caractéristique mécanique du support de fixation peut être une distance de déport de la surface supérieure du module de refroidissement relativement à la surface inférieure du capot, la distance de déport étant supérieure à une déformation maximale du capot lors du choc piéton.

La caractéristique mécanique du support de fixation peut être une résistance à la rupture, le support de fixation se rompant lorsque la déformation du capot est supérieure à un seuil de déformation prédéfini lors du choc piéton.

Le support de fixation peut comporter au moins une zone de fragilité.

La zone de fragilité du support de fixation peut comporter une amorce de rupture.

La zone de fragilité du support de fixation peut être formée par le point de fixation du support de fixation au capot ou au module de refroidissement.

La zone de fragilité du support de fixation peut comporter au moins un évidement.

Le bloc avant peut en outre comporter un conduit d'acheminement d'air captant l'air de l'extérieur du véhicule et le diffusant vers le module de refroidissement, le conduit étant positionné en dessous du capot dans l'espace ménagé entre la surface supérieure du groupe motopropulseur et la surface inférieure du capot, le conduit étant constitué d'un matériau apte à se déformer ou à se rompre sous l'action de la déformation du capot lors du choc piéton.

Le module de refroidissement peut comporter au moins un élément choisi parmi les éléments comportant un radiateur du groupe motopropulseur, un condenseur de climatisation, un refroidisseur d'air de suralimentation, et un ventilateur.

Selon un second aspect, l'invention concerne un véhicule automobile comportant un tel bloc avant.

L'invention permet notamment de satisfaire aux réglementations en matière de choc piéton. D'autres avantages apparaîtront dans la description qui va suivre.

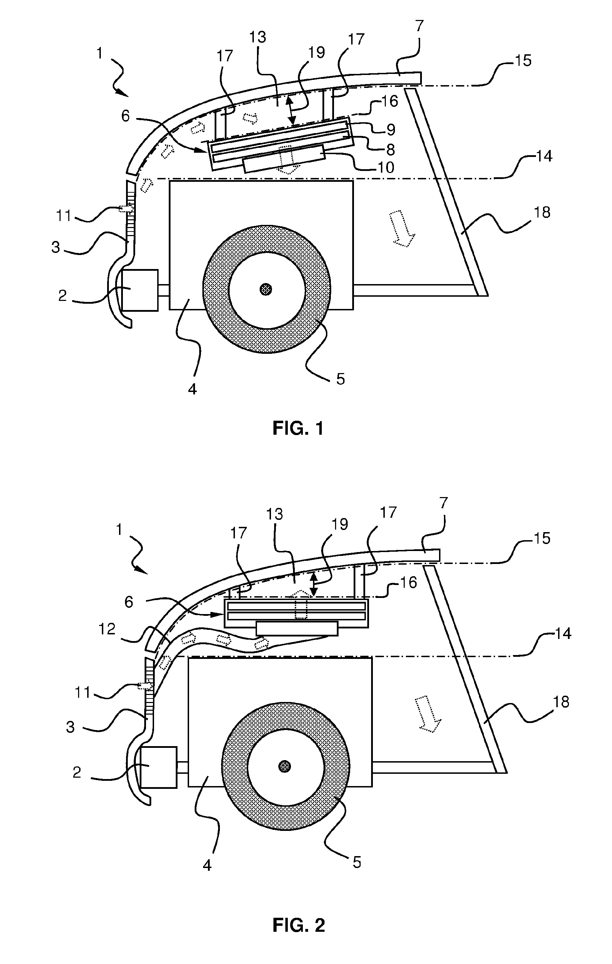

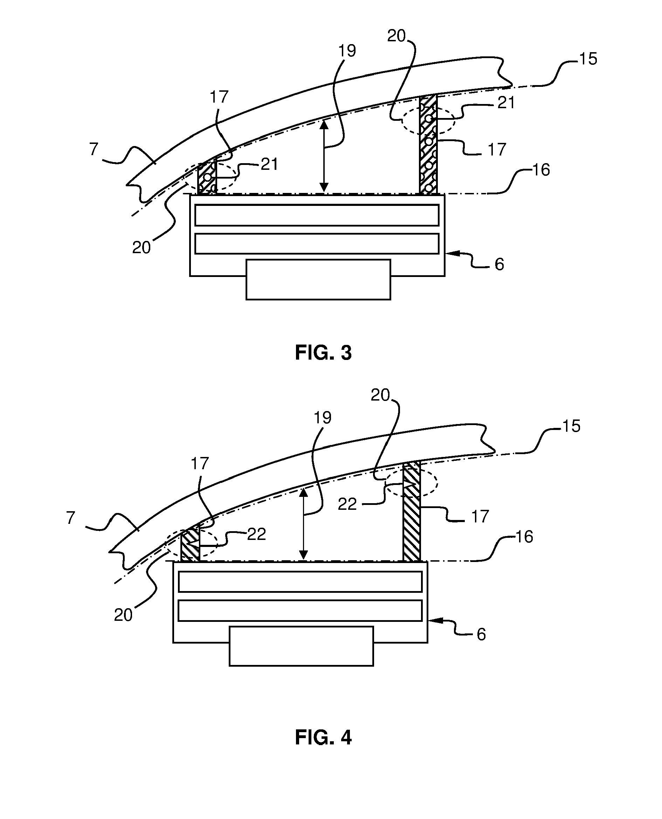

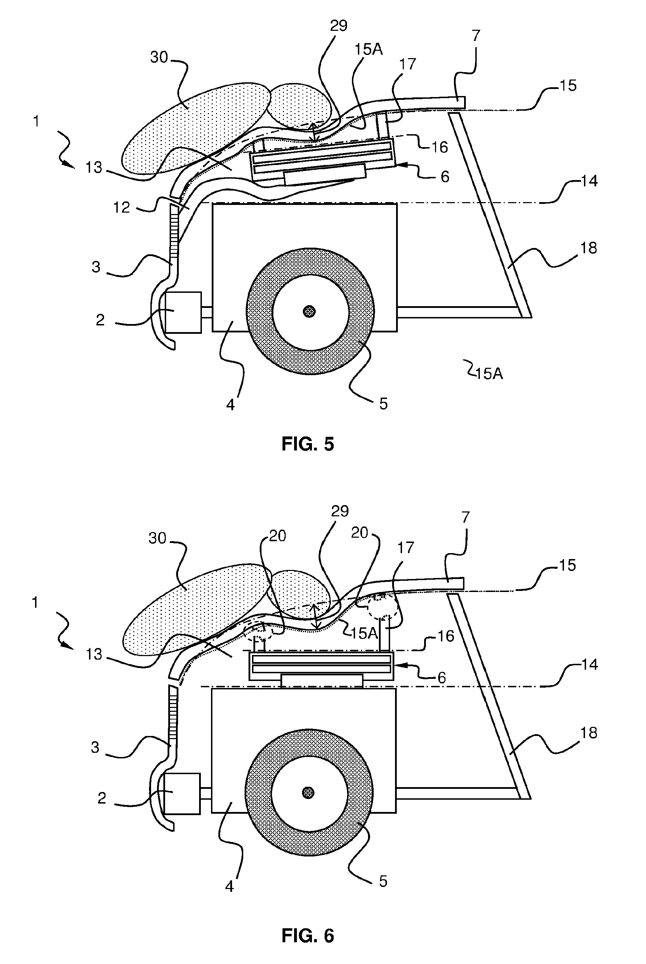

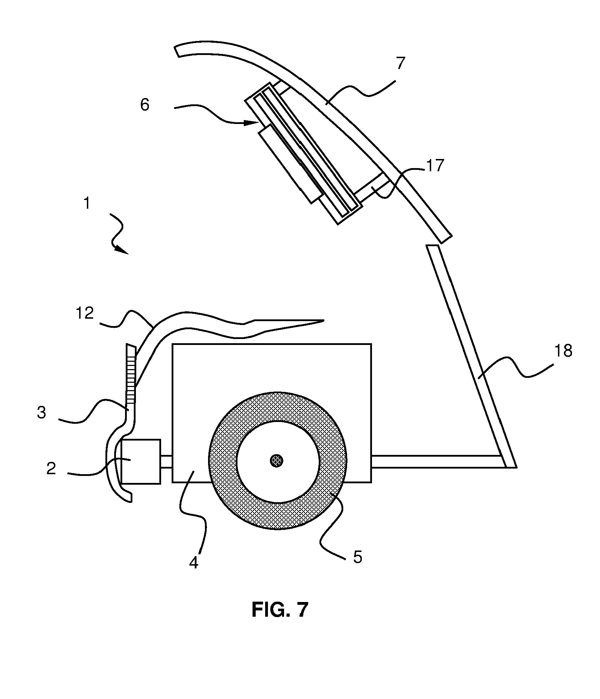

La présente invention est illustrée par des exemples non limitatifs sur les Figures jointes, dans lesquelles des références identiques indiquent des éléments similaires:
● La Figure 1 est une vue de côté en coupe représentant schématiquement un bloc avant d'un véhicule automobile selon un premier mode de réalisation de l'invention;
● La Figure 2 représente schématiquement un bloc avant d'un véhicule automobile selon un deuxième mode de réalisation de l'invention;
● Les Figures 3 et 4 illustrent deux exemples de support de fixation du module de refroidissement au capot;
● Les Figures 5 et 6 illustrent schématiquement deux exemples d'un choc tête contre le capot d'un bloc avant d'un véhicule automobile selon l'invention; et
● La Figure 7 représente schématiquement le bloc avant d'un véhicule automobile selon le deuxième mode de réalisation de l'invention lors d'une phase de maintenance.

Dans la suite, les terminologies "avant" et "arrière" sont définies par rapport à la direction de déplacement généralement en marche avant du véhicule automobile. Les terminologies "inférieur" et "supérieur" caractérisant un élément sont définies par rapport à la position de la caractéristique concernée dudit élément relativement au sol sur lequel se déplace le véhicule automobile.

Les Figures 1 et 2 sont des vues de côté en coupe représentant schématiquement un bloc avant 1 d'un véhicule automobile selon respectivement un premier et un deuxième mode de réalisation de l'invention. Le bloc avant 1 comporte un pare-chocs 2 recouvert d'un ensemble 3 comportant une calandre se prolongeant par un bandeau de pare-chocs, un groupe motopropulseur 4, au moins une roue 5, un module de refroidissement 6, et un capot 7. Le bloc avant 1 est séparé du reste du véhicule, notamment de l'habitacle se trouvant en arrière du bloc avant, par un tablier 18.

Dans les exemples présentés, le capot 7 recouvre intégralement le groupe motopropulseur 4 et le module de refroidissement 6. Cependant, il est envisageable que le capot 7 ne recouvre que partiellement le groupe motopropulseur 4 et le module de refroidissement 6.

Le groupe motopropulseur 4 est couplé à la, au moins une, roue 5 et est adapté pour l'entrainer de manière à mouvoir le véhicule automobile. La Figure 1 illustre partiellement un véhicule automobile à traction (la puissance du groupe motopropulseur est transmise aux roues motrices avant), mais l'invention ne fait pas obstacle à son application à un véhicule automobile à propulsion (la puissance du groupe motopropulseur est transmise aux roues motrices arrière) ou à transmission intégrale (la puissance du groupe motopropulseur est transmise à toutes les roues).

Le module de refroidissement 6 est adapté pour évacuer de la chaleur du groupe motopropulseur 4. Le module de refroidissement comporte un radiateur 8 du groupe motopropulseur. Le module de refroidissement 6 peut également être adapté pour évacuer de la chaleur de l'habitacle au moyen d'un dispositif de climatisation comportant un condenseur de climatisation 9. Dans le cas d'un groupe motopropulseur 4 turbocompressé, un refroidisseur d'air de suralimentation peut également être prévu. Le module de refroidissement 6 peut en outre comporter un ventilateur 10 aspirant ou soufflant. Les éléments constitutifs du module de refroidissement sont maintenus par un cadre. La chaleur est évacuée du module de refroidissement 6 par balayage du module de refroidissement 6 par un flux d'air 11 provenant de l'extérieur du véhicule automobile. Le module de refroidissement 6 est couplé au groupe motopropulseur 4 par des conduites adaptées et connus permettant notamment l'ouverture du capot telle qu'illustrée sur la Figure 7.

Le flux d'air 11 peut traverser la calandre par une grille adaptée, puis pénétrer dans le bloc avant 1 pour se diriger librement vers le module de refroidissement 6 comme représenté à la Figure 1.

Alternativement, le flux d'air 11 peut traverser la calandre par une grille adaptée, puis pénétrer dans le bloc avant 1 pour être diriger par un conduit d'acheminement d'air 12 vers le module de refroidissement 6 comme représenté à la Figure 2.

Le capot 7 est disposé au dessus du groupe motopropulseur 4 et du module de refroidissement 6. Plus précisément, le module de refroidissement 6 est positionné en dessous du capot 7 dans un espace 13 ménagé entre une surface supérieure 14 du groupe motopropulseur et une surface inférieure du capot 15. Le module de refroidissement 6 peut être positionné longitudinalement de manière horizontale ou plus ou moins inclinée en tenant compte des limites dimensionnelles de cet espace 13. Le module de refroidissement forme généralement un bloc d'un seul tenant de forme parallélépipédique et comporte une surface supérieure 16 en vis-à-vis de la surface inférieure du capot 15

Le module de refroidissement 6 est fixé au capot 7 par au moins un support de fixation 17 en dessous du capot 7. Le module de refroidissement 6 est donc solidaire su capot. Le nombre de support de fixation 17 et leurs positions relativement au module de refroidissement 6 sont déterminés pour assurer une bonne solidarité permettant de tenir compte des conditions de roulage, des vibrations, etc... A titre d'exemple, il est possible de prévoir quatre supports de fixation à l'avant et à l'arrière de part et d'autre du module de refroidissement 6.

La Figure 7 représente schématiquement le bloc avant 1 d'un véhicule automobile selon le mode de réalisation de l'invention comportant un conduit d'acheminement d'air 12 lors d'une phase de maintenance. Le capot 7 peut être levé de manière usuelle afin de permettre un accès pour maintenance du groupe motopropulseur 4 et du module de refroidissement 6. Le module de refroidissement 6 étant solidaire du capot 7, il est donc relevé conjointement avec le capot. Ainsi, l'accès direct au groupe motopropulseur 4 et au module de refroidissement 6 est facilité.

Selon l'invention, le support de fixation 17 comporte une caractéristique mécanique telle que, lors d'un choc piéton, le capot 7 se déforme sans que la surface inférieure du capot 15 n'entre en contact avec une surface supérieure 16 du module de refroidissement 6. Ceci est mis en oeuvre en rendant les supports de fixation déformable ou fusible soit par un choix de matériau, soit par la forme d'un élément constitutif des supports de fixation. Le mode de fonctionnement des supports de fixation lors d'un choc piéton sera décrit plus en détail en relation avec les Figures 5 et 6.

Selon les exemples des Figures 1 et 2, les supports de fixation 17 déportent d'une distance de déport 19 la surface supérieure 16 du module de refroidissement 6 relativement à la surface inférieure du capot 15. Dans l'exemple présenté à la Figure 1, la distance de déport 19 est sensiblement identique le long de la surface supérieure 16 du module de refroidissement 6 en raison d'un positionnement du module de refroidissement sensiblement parallèle à la surface inférieure du capot. Dans l'exemple présenté à la Figure 2, la distance de déport 19 va croissante de l'avant vers l'arrière du bloc avant 1. A titre d'exemple, la distance de déport 19 peut être de l'ordre de 80 mm.

Les Figures 3 et 4 illustrent deux exemples de support de fixation 17 du module de refroidissement 6 au capot 7. Dans ces deux exemples, le support de fixation 17 comporte en outre au moins une zone de fragilité 20.

La zone de fragilité 20 du support de fixation peut comporter au moins un évidement 21 ou une amorce de rupture 22. Pratiquement, le support de fixation 17 peut être constitué d'une tôle perforée comme illustré sur la Figure 3, découpée ou entaillée (entaille en forme de U ou de V) comme illustré sur la Figure 4.

La zone de fragilité 20 du support de fixation peut être formée par le point de fixation du support de fixation 17 au capot 7 ou au module de refroidissement 6. A titre d'exemple, le support de fixation 17 peut être soudé ou fixé par une vis au capot 7 ou au module de refroidissement 6.

Les Figures 5 et 6 illustrent schématiquement deux exemples d'un choc de la tête d'un piéton 30 contre le capot 7 d'un bloc avant 1 d'un véhicule automobile.

Ces Figures illustrent la fin du choc lorsque toute l'énergie du choc du piéton 30 contre le capot 7 a été dissipée. Lors du choc piéton, le capot 7 se déforme et l'espace 13 définit initialement entre la surface inférieure du capot 15 et la surface supérieure 16 du module de refroidissement 6 tend à se réduire. A la fin du choc, c'est-à-dire lorsque toute l'énergie du choc a été dissipée dans la déformation du capot, celui-ci présente une surface inférieure du capot post choc 15A (illustrée par un trait pointillé) différente de la surface inférieure du capot 15 (illustrée par un trait tiret-point). Le support de fixation 17 comporte une caractéristique mécanique permettant d'éviter que la déformation du capot n'entraine le contact de ces deux surfaces. En effet, un tel contact conduirait à ce que la tête du piéton heurte un élément dur (module de refroidissement 6) empêchant la dissipation de l'énergie par déformation continue du capot et pouvant entraîner des lésions à la tête du piéton. Le support de fixation permet donc que le piéton, en particulier sa tête puisse s'enfoncer dans l'espace 13 sur une course importante sans heurter d'élément dur. Ainsi, les risques de lésions, notamment à la tête du piéton 30, sont réduits.

La Figure 5 illustre un exemple de réalisation dans lequel la caractéristique mécanique du support de fixation 17 est la distance de déport 19 de la surface supérieure 16 du module de refroidissement 6 relativement à la surface inférieure 15 du capot 7. La distance de déport 19 (voir Figures 1-4) avant le choc piéton est supérieure à la déformation maximale 29 du capot 7 lors du choc piéton.

Dans cet exemple, le bloc avant comporte également un conduit d'acheminement d'air 12. Le conduit est positionné en dessous du capot dans l'espace 13. II est avantageusement constitué d'un matériau apte à se déformer ou à se rompre sous l'action de la déformation du capot 7 et/ou du module de refroidissement 6 lors du choc piéton. De cette manière, il ne gène pas la dissipation de l'énergie du choc et ne constitue par un élément dur pouvant entraîner des lésions à la tête du piéton.

La Figure 6 illustre un exemple de réalisation dans lequel la caractéristique mécanique du support de fixation 17 est une résistance à la rupture. Le support de fixation 17 constitue un élément déformable ou fusible pouvant se rompre lorsque la déformation du capot est supérieure à un seuil de déformation défini. La rupture a lieu au niveau de la zone de fragilité 20 du support de fixation 7. Cette rupture entraîne la chute du module de refroidissement 6 sur le groupe motopropulseur 4, en particulier sur la surface supérieure 14 du groupe motopropulseur 4. Le module de refroidissement 6 décroché du capot 7 se trouve positionné à une distance supérieure à la déformation maximale 29 du capot 7 lors du choc piéton. Ce mode de réalisation permet également de dissiper une partie de l'énergie du choc par la destruction partielle des supports de fixation. En outre, elle permet de s'accommoder au mieux de l'espace sous capot disponible afin d'optimiser la position et l'orientation du module de refroidissement 6 relativement au balayage par le flux d'air extérieur.

Le bloc avant qui vient d'être décrit trouve une application particulière dans le domaine des véhicules automobiles. Les autres éléments constitutifs du véhicule automobile (représenté partiellement sur les Figures) intégrant le bloc avant ne seront pas décrits plus en détails. Les signes de références dans les revendications n'ont aucun caractère limitatif. Le verbe "comporter" n'exclut pas la présence d'autres éléments que ceux listés dans les revendications. Le mot "un" précédant un élément n'exclut pas la présence d'une pluralité de tels éléments.

## Revendications

1. Bloc avant (1) d'un véhicule automobile comportant un groupe motopropulseur (4), un module de refroidissement (6) adapté pour évacuer de la chaleur du groupe motopropulseur (4), un capot (7) disposé au dessus du groupe motopropulseur (4) et du module de refroidissement (6) les recouvrant au moins partiellement, le bloc avant (1) est **caractérisé en ce que**:
- le module de refroidissement (6) est fixé au capot (7) par au moins un support de fixation (17) en dessous du capot (7) dans un espace (13) ménagé entre une surface supérieure du groupe motopropulseur (14) et une surface inférieure du capot (15), et
- le support de fixation (17) comporte une caractéristique mécanique telle que, lors d'un choc piéton, le capot (7) se déforme sans que la surface inférieure du capot (15) n'entre en contact avec une surface supérieure du module de refroidissement (16).

2. Bloc avant selon la revendication 1, dans lequel la caractéristique mécanique du support de fixation (17) est une distance de déport (19) de la surface supérieure du module de refroidissement (16) relativement à la surface inférieure du capot (15), la distance de déport (19) étant supérieure à une déformation maximale (29) du capot (7) lors du choc piéton.

3. Bloc avant selon la revendication 1, dans lequel la caractéristique mécanique du support de fixation (17) est une résistance à la rupture, le support de fixation (17) se rompant lorsque la déformation du capot (7) est supérieure à un seuil de déformation prédéfini lors du choc piéton.

4. Bloc avant selon l'une des revendications 1 à 3, dans lequel le support de fixation (17) comporte au moins une zone de fragilité (20).

5. Bloc avant selon la revendication 4, dans lequel la zone de fragilité (20) du support de fixation (17) comporte une amorce de rupture (22).

6. Bloc avant selon la revendication 4, dans lequel la zone de fragilité (20) du support de fixation (17) est formée par le point de fixation du support de fixation (17) au capot (7) ou au module de refroidissement (6).

7. Bloc avant selon la revendication 4, dans lequel la zone de fragilité (20) du support de fixation (17) comporte au moins un évidement (21).

8. Bloc avant selon l'une des revendications 1 à 7, dans lequel le bloc avant (1) comporte en outre un conduit d'acheminement d'air (12) captant l'air de l'extérieur du véhicule et le diffusant vers le module de refroidissement (6), le conduit (12) étant positionné en dessous du capot (7) dans l'espace (13) ménagé entre la surface supérieure du groupe motopropulseur (14) et la surface inférieure du capot (15), le conduit (12) étant constitué d'un matériau apte à se déformer ou à se rompre sous l'action de la déformation du capot (7) lors du choc piéton.

9. Bloc avant selon l'une des revendications 1 à 8, dans lequel le module de refroidissement (6) comporte au moins un élément choisi parmi les éléments comportant un radiateur du groupe motopropulseur (8), un condenseur de climatisation (9), un refroidisseur d'air de suralimentation, et un ventilateur (10).

10. Véhicule automobile caractérisé en qu'il comporte un bloc avant selon l'une des revendications 1 à 9.
